# EUROPEAN PATENT APPLICATION

(11) **EP 2 410 227 A1**
(43) Date of publication of application: **25.01.2012**
(21) Application number: 11001708.4
(22) Date of filing: 02.03.2011
(51) Int. Cl.: F16L 23/04, F16L 47/14

(54) **Heading joint of two parts of casing subjected to internal pressure**

(30) Priority: 02.07.2010 PL 39170810
(71) Applicant: Apator Metrix SA, 83-110 Tczew (PL)
(72) Inventor: Megier, Mariusz, 83-110 Tczew (PL); Babraj, Grzegorz, 83-180 Gdansk (PL)

(57) **Abstract**

Heading joint of two parts of casing subjected to internal pressure, particularly parts of a gas meter casing, having on the butting faces of the two casings circumferential external flanges with clamped circumferential band on their edges, where at least one of the circumferential flanges /2/ or /6/ has a circumferential pocket /5/ filled with sealing compound /8/ and has band /3/ whose shorter end overlaps the flange before the external deflection /4/ of the circumferential pocket /5/.

## Description

Subject of the invention is heading joint of two parts of casing subjected to internal pressure, particularly of the gas meter casing.

The known PL 205421 patent specification describes a flange bolt joint used for tight joining of pipeline sections with flanges at the pipe ends. The joint is characterised by the sealing element in the form of a ring with flat side surfaces and the external surface formed by three surfaces, the central cylindrical profile surface coaxial with the pipeline axis, and the side surfaces, symmetric in relation to the plane, perpendicular to the pipeline axis, passing through the middle point of the pipeline axial height, are inclined in relation to the pipeline axis at an angle of (45-30)°, favourable 40° angle, with a circumferential gasket of the internal and external surface profile matching the ring external surfaces, and the encasing flange on the sealing ring flat surfaces, the pipe flanges having an internal pocket with the wall shape matching the half-ring external surface.

The known PL 198627 patent specification describes a burred flange joint as well as its manufacturing method and production facility. It provides improved durable sealing of the burred flange joints with double flanging, surrounded on the outside by an at least partially tight seam in a continuous sealing formed by the second double flanging.

The known P - 298694 patent specification describes a heading joint of two cylindrical elements subjected to an internal pressure, particularly the boiler proper pipes. In the heading joint, the upper element has a bevel at the welded joint with the bottom element, and the bottom element has a continuous external circumferential bulge with flat contact surface. The circumferential bulge contact surface is larger than the upper element contact surface and the bottom element internal diameter is smaller than the upper element internal diameter, in correspondence with the assumed tolerance of the joined cylindrical element axes.

The known P - 372190 patent specification describes a flange joint. The invention in question is a method of joining two flanges, particularly flanges fastened to the wind power generator mast segments (rings) and joining those segments together, the flanges being joined in a forced interlocking assembly. The invention is based on the observation that significant time savings can be made if the layer needs not be applied to one of the contacting flange surfaces on the construction site but has been already prepared. Moreover, the layer may contain a thermoplastic material. This allows to ensure a homogenous layer quality in the controlled production conditions and to eliminate reliably a risk of foreign material inclusions in the layer if it is applied in the open air conditions. The layer can be applied to the bearing surface before transportation of the mast sections, or it can be taken out of from the transportation packing on the construction site and applied to the bearing surface in a time-saving manner. The method of joining two flanges consists in placing the layer in the contact area, the layer in the first time period before joining and in the third time period after joining being less deformable than in the second time period between the first and the third time period, and in the second time period the layer viscosity increases.

The substance of the invention is heading joint of two parts of casing subjected to internal pressure, particularly of the gas meter casing, having circumferential external flanges on the two casing heading joint contact surfaces with clamped circumferential band on the edges. At least one of the circumferential flanges has a circumferential pocket filled with sealing compound and a band whose shorter end overlaps the circumferential pocket external deflection. The circumferential pocket is divided by a bulge, to form an additional circumferential pocket open outwards and filled with sealing compound. The band shorter end overlaps the circumferential flange before the circumferential pocket bulge external deflection.

The band shorter end overlaps the circumferential flange opposite the bulge. The band equal ends overlap the circumferential flanges.

The presented invention solution increases the joint strength and improves the joint tightness.

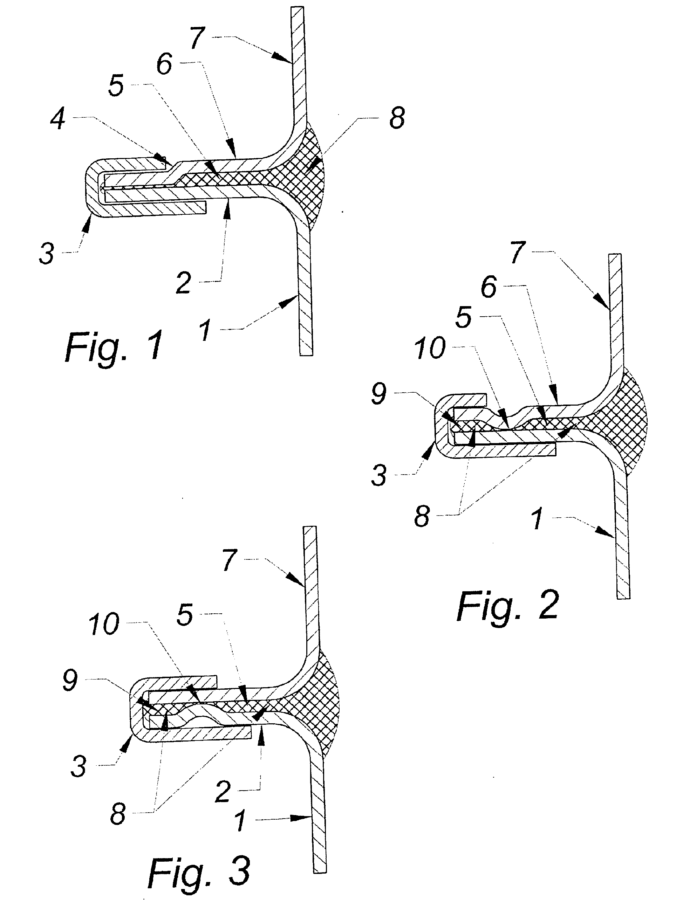

The invention solution is shown in the drawings. Fig. 1 presents a cross-section of the joint with one circumferential pocket, Fig. 2 presents a cross-section with two pockets and bulge in the upper external flange, Fig. 3 presents a cross-section with two pockets and bulge in the lower external flange.

### Execution example I

Heading joint of two parts of casing subjected to internal pressure, upper part 7 and lower part 1 of a gas meter casing, having on the butting faces of the two 7 and 1 casings circumferential external flanges 2 and 6 with clamped circumferential band 3 on their edges. The circumferential flange 6 has a circumferential pocket 5 filled with sealing compound 8 and has band 3 whose shorter end overlaps the flange before the external deflection 4 of the circumferential pocket 5.

### Execution example II

Heading joint of two parts of casing subjected to internal pressure, upper part 7 and lower part 1 of a gas meter casing, having on the butting faces of the two 7 and 1 casings circumferential external flanges 2 and 6 with clamped circumferential band 3 on their edges. The circumferential pocket 5 is divided by the bulge 10 to form an additional circumferential pocket 9 open outwards and filled with sealing compound 8. The band 3 shorter end overlaps the circumferential flange 6 before the circumferential pocket 9 bulge 10 external deflection.

### Execution example III

Heading joint of two parts of casing subjected to internal pressure, upper part 7 and lower part 1 of a gas meter casing, having on the butting faces of the two 7 and 1 casings circumferential external flanges 2 and 6 with clamped circumferential band 3 on their edges. The circumferential pocket 5 is divided by the bulge 10 to form an additional circumferential pocket 9 open outwards and filled with sealing compound 8. The band 3 shorter end overlaps the circumferential flange 2 opposite to bulge 10.

### Execution example IV

Heading joint of two parts of casing subjected to internal pressure, upper part 7 and lower part 1 of a gas meter casing, having on the butting faces of the two 7 and 1 casings circumferential external flanges 2 and 6 with clamped circumferential band 3 on their edges. The circumferential pocket 5 is divided by the bulge 10 to form an additional circumferential pocket 9 open outwards and filled with sealing compound 8. The band 3 equal ends overlap the circumferential flange 2 and circumferential flange 6.

## Claims

1. Heading joint of two parts of casing subjected to internal pressure, particularly parts of a gas meter casing, having on the butting faces of the two casings circumferential external flanges with clamped circumferential band on their edges, wherein at least one of the circumferential flanges /2/ or /6/ has a circumferential pocket /5/ filled with sealing compound /8/ and has band /3/ whose shorter end overlaps the flange before the external deflection /4/ of the circumferential pocket /5/.

2. Joint in accordance with claim 1, wherein the circumferential pocket /5/ is divided by the bulge /10/ to form an additional circumferential pocket /9/ open outwards and filled with sealing compound /8/ and the band /3/ shorter end overlaps the circumferential flange /6/ before the circumferential pocket /9/ bulge /10/ external deflection.

3. Joint in accordance with claim 2, wherein the band 3 shorter end overlaps the circumferential flange /2/ opposite to bulge /10/.

4. Joint in accordance with claim 1, wherein the band /3/ equal ends overlap the circumferential flanges /2/ and /6/.
